# EUROPÄISCHE PATENTSCHRIFT

(11) **EP 0 551 050 B1**
(45) Veröffentlichungstag und Bekanntmachung des Hinweises auf die Patenterteilung: **26.06.1996**
(21) Anmeldenummer: 92810016.3
(22) Anmeldetag: 10.01.1992
(51) Int. Cl.: F16H 21/14, F16H 1/32

(54) **Exzentergetriebe**
Eccentric gearing
Transmission excentrique

(43) Veröffentlichungstag der Anmeldung: 14.07.1993
(73) Patentinhaber: AGINFOR AG für industrielle Forschung, CH-5430 Wettingen (CH)
(72) Erfinder: Güttinger, Heinrich, CH-5430 Wettingen (CH)
(74) Vertreter: Klein, Ernest

(56) Entgegenhaltungen:
- DE-A- 2 731 486
- FR-A- 2 214 841
- GB-A- 2 160 612

## Beschreibung

### Technisches Gebiet

Die Erfindung betrifft ein Exzentergetriebe entsprechend den im Oberbegriff von Anspruch 1 aufgeführten Merkmalen. Ein solches Exzentergetriebe ist aus Fig. 3 der GB-A 2 160 612 bekannt.

### Stand der Technik

Exzentergetriebe finden insbesondere Einsatz in Industrierobotern, wo sie sich durch ihre kleinen Abmessungen, ihre Drehspielarmut und ihre Drehsteifigkeit auszeichnen. Auf dem Markt erhältliche Exzentergetriebe bestehen im wesentlichen aus einer mit einem Exzenter versehenen zentralen schnellaufenden Antriebswelle. Auf dem Exzenter ist eine Zahnscheibe mit einer Aussenverzahnung gelagert, welche während des Betriebes mit einer Innenverzahnung kämmt. Diese Innenverzahnung ist üblicherweise an einem Hohlrad angeordnet, das fest mit dem Gehäuse verbunden ist. Die Übersetzung des Getriebes ist abhängig von den Zähnezahlen der beiden ineinandergreifenden Verzahnungen beziehungsweise von deren Wälzkreisdurchmessern. Der Eingriff der Verzahnungen findet immer dort statt, wo der Exzenter dem Wälzkreis am nächsten steht. Die Eigenbewegung der kleineren Verzahnung ist gegenüber dem Exzenter entgegengesetzt und entspricht der Differenz des Umfanges der beiden Verzahnungen. Die auf dem Exzenter geführte Zahnscheibe dreht sich um ihre eigene Achse. Diese jedoch dreht auf der Kreisbahn, die durch den Exzenter vorgegeben ist. Die daraus entstehende zykloidische Bewegung muss in eine Drehbewegung zurückgeführt werden. Hierzu ist die Zahnscheibe mit einer grossen Anzahl Bohrungen versehen, in welche jeweils ein Mitnehmerbolzen eingreift. Diese Mitnehmerbolzen sind an einem mit der Abtriebswelle drehfest verbundenen Flansch befestigt und bilden somit die Kupplung zwischen Antrieb und Abtrieb. Um das Zahnspiel und das Spiel in der Bolzenkupplung ausschalten zu können, müssen derartige Getriebe mit einer Ausgleich- respektiv Nachstellvorrichtung ausgestattet sein.

Exzentergetriebe der eingangs genannten Art sind bekannt, beispielsweise aus GB-A-2 160 612 oder aus DE-A-2 731 486. Gemäss GB-A-2 160 612 Fig. 3 und zugehöriger Beschreibung kann ein solches Getriebe zur Führung der orbitierenden Zahnscheibe mindestens zwei über dem Umfang der Zahnscheibe angeordnete Exzenterwellen aufweisen, wobei jedoch im gezeigten Fall die drei Exzenterwellen nicht gleichmässig verteilt sind. Auch die DE-A-2 731 486 zeigt Exzentergetriebe mit drei oder mehreren Exzenterwellen, die alle nicht gleichmässig über dem Umfang verteilt sind.

Bei einem weiteren aus der FR-A-2 214 841 bekannten Exzentergetriebe sind Antriebswelle und Abtriebswelle koaxial angeordnet. Hier sind zwar die Exzenterwellen mit gleichmässigen Abständen zur Drehachse der Antriebswelle angeordnet, jedoch handelt es sich zum Vermeiden der Eigenrotation der Getriebeglieder jeweils nur um zwei derartige Exzenterwellen.

### Darstellung der Erfindung

Der Erfindung liegt die Aufgabe zugrunde, ein Exzentergetriebe der eingangs genannten Art zu schaffen, welches ohne Bolzenkuplung und den damit verbundenen Unzulänglichkeiten auskommt.

Erfindungsgemäss wird dies mit den kennzeichnenden Merkmalen der Patentansprüche erreicht.

Der Vorteil der Erfindung ist in der eindeutigen und hochpräzisen Führung der orbitierenden Teile zu sehen, was sich günstig auf den Zahneingriff auswirkt; auf Mittel zum Aufheben des Zahnspiels kann verzichtet werden. Ein weiterer Vorteil ergibt sich im Wegfall des bisher üblichen zentralen Antriebs. Dadurch kann der antriebsseitig freiwerdende zentrale Raum beispielsweise für die Lagerung der hochbelasteten Abtriebswelle benutzt werden.

Der Schieber orbitiert mit einem gegenüber der Antriebsexzentrizität wesentlich grösseren Exzentrizität. Diese Lösung gestattet es, sehr grosse Untersetzungsverhältnisse mit nur einer Getriebestufe und damit mit sehr kleiner Antriebsexzentrizität zu realisieren; kleine Exzenter sind nämlich selbsthemmend und vermögen das Antriebsdrehmoment nicht abzugeben. Mit der neuen Massnahme kann das Drehmoment vom kreisenden Schieber auf die kreisende Zahnscheibe problemlos übertragen werden, wodurch auf den sonst erforderlichen Zwangsantrieb, beispielsweise Zahnriemenantrieb, aller beteiligter Exzenterwellen verzichtet werden kann. Darüberhinaus erlaubt die neue Massnahme die Anwendung von kostengünstigen Gleitlagern für die Exzenter.

### Kurze Beschreibung der Zeichnung

In der Zeichnung ist ein Ausführungsbeispiel der Erfindung schematisch dargestellt.
Es zeigen:
- Fig. 1: einen Längsschnitt durch das Exzentergetriebe;
- Fig. 2: einen Querschnitt durch das Exzentergetriebe gemäss Linie II-II in Fig. 1;
- Fig. 3: einen Querschnitt durch das Exzentergetriebe gemäss Linie III-III in Fig. 1;

Es sind nur die für das Verständnis der Erfindung wesentlichen Elemente gezeigt. Nicht dargestellt sind beispielsweise der Antrieb, die detaillierte Gehäuseausbildung usw. Die Dreh- und Kreisrichtung der Teile ist mit Pfeilen bezeichnet.

### Weg zur Ausführung der Erfindung

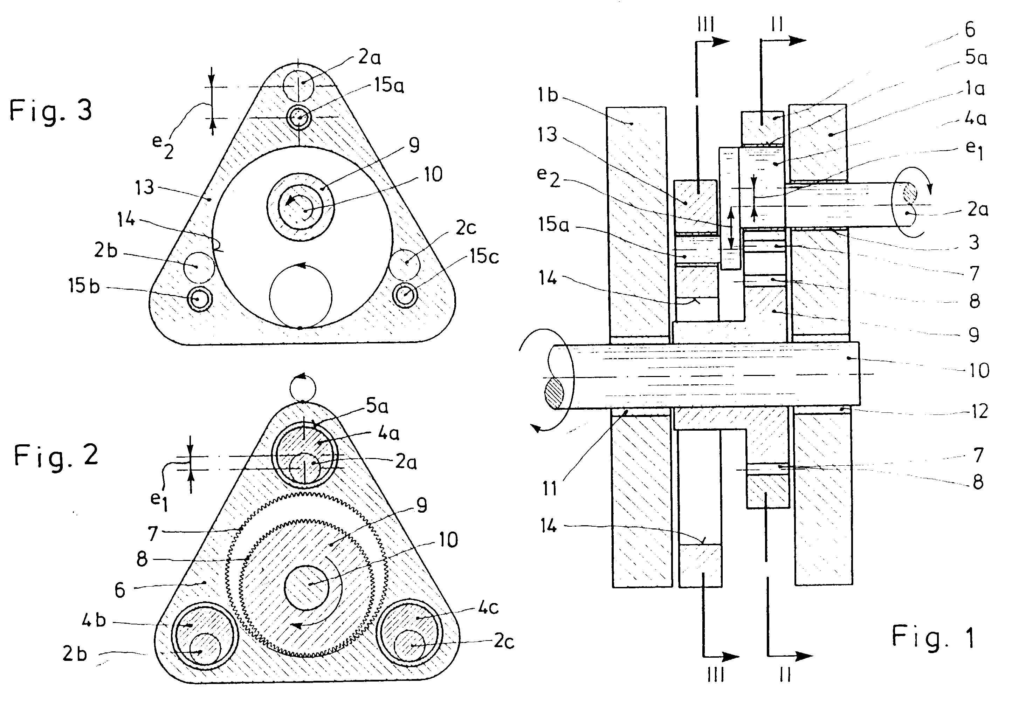

Das Exzentergetriebe gemäss den Fig. 1 - 3 ist in seiner einfachsten Form dargestellt. Es besteht aus den beiden Gehäusehälften 1a und 1b, die auf nichtgezeigte übliche Art mittels Verschraubungen miteinander verbunden sind. Der Antrieb des Getriebes erfolgt über eine Exzenterwelle 2a, welche die Gehäusehälfte la durchdringt. Sie ist mit einem Gleitlager 3 in dieser Gehäusehälfte gelagert. Die Welle 2a ist mit einem Exzenter 4a bestückt, welcher, ebenfalls als Gleitlager ausgebildet, in einer Bohrung 5a einer Zahnscheibe 6 einsitzt. Der Exzenter 4a setzt die Zahnscheibe 6 anlässlich seiner Drehung in eine kreisende Bewegung. Um eine Eigendrehung der Zahnscheibe zu vermeiden, sind zur Führung der Zahnscheibe 6 zwei weitere Exzenterwellen 2b und 2c vorgesehen. Sie sind ebenfalls in der Gehäusehälfte 1a gelagert und ihre jeweiligen Exzenter 4b und 4c greifen in entsprechende Bohrungen in der Zahnscheibe 6 ein. Die drei Exzenterwellen sowie die zugehörigen Bohrungen sind um je 120° versetzt über dem Umfang der Zahnscheibe verteilt und befinden sich in der gleichen Radialebene. Die Zahnscheibe 6 weist einen Zahnkranz 7 mit Innenverzahnung auf.

Im Eingriff mit dieser eine orbitierende Bewegung ausführenden Innnenverzahnug steht ein Zahnkranz 8 mit einer entsprechenden Aussenverzahnung. Dieser zweite Zahnkranz ist Teil einer Zahnscheibe 9. Diese Zahnscheibe 9 führt eine reine Drehbewegung aus und ist einer Abtriebswelle 10 drehfest verbunden. Die Abtriebswelle 10 ist in den beiden Gehäusehälften 1a und 1b im Beispielsfall mittels Gleitlagern 11 und 12 gelagert.

Die Mittelachsen der beiden Zahnkränze sind um die gleiche Exzentrizität e1 gegeneinander versetzt, welche die Exzenter 4a-4c aufweisen. Diese nur sehr geringe Exzentrizität e1 bestimmt das Übersetzungsverhältnis. Entsprechend der geringen Exzentrizität weist der angetriebene Zahnkranz auch nur geringfügig weniger Zähne auf als der antreibende Zahnkranz. Hieraus ergibt sich bereits einer der Vorteile dieser Getriebeanordnung, nämlich der, dass die Verzahnug mit einer langen Zahneingriffstrecke arbeitet. Die Übersetzung ist demnach abhängig von den beiden Zähnezahlen respektiv von den Wälzkreisdurchmessern der beiden im Eingriff stehenden Verzahnungen. Dreht sich die Antriebswelle und damit der Exzenter 4a um eine volle Umdrehung, so findet zwischen den Zahnscheiben ein vollständiger Zahnwechsel statt. Alle Zähne sind bei dieser einen Umdrehung im Eingriff gewesen. Dabei hat sich die angetriebene rotierende Zahnscheibe jedoch nicht ein ganzes Mal um ihre eigene Achse gedreht, sondern sie hat sich nur um die Differenz der Zähnezahlen weitergedreht. Hat zum Beispiel der orbitierende Zahnkranz 110 Zähne und jener des drehenden Zahnkranz 100 Zähne, so hat sich bei einer Umdrehung der Exzenter 4a-4c die innere Zahnscheibe 9 um 10 Zähne weitergedreht. Die äussere Zahnscheibe 6 muss demnach 10 mal kreisen, damit die innere Zahnscheibe 9 eine vollständige Umdrehung macht. Die Übersetzung beträgt demanch 1 : 10. Entsprechend der Zähnezahlen verhalten sich die Wälzkreisdurchmesser der beiden im Eingriff stehenden Verzahnungen. Die Differenz der Wälzkreisdurchmesser beträgt immer das Doppelte der Exzentrizität e1.

Hieraus folgt, dass bei grosser Übersetzung die Exzentrizität e1 so klein werden kann, dass eine Übertragung des Antriebsdrehmomentes über den Exzenter 4a allein nicht mehr möglich ist. Abhilfe schafft hier die Anordnung eines die drei Exzenterwellen 2a, 2b und 2c miteinander verbindenden Schiebers 13. Dieser Schieber muss dann zur Übertragung des Drehmomentes mit einer Exzentrizität e2 kreisen, die grösser ist als die Antriebsexzentrizität e1. Es versteht sich, dass in diesem Zusammenhang auf die Bekanntgabe von Absolutwerten verzichtet werden muss, da diese von allzu zahlreichen Parametern abhängig sind. Die zu wählende Exzentrizität e2 muss jedenfalls gross genug sein, um die Selbsthemmung einer allzu kleinen Antriebsexzentrizität e1 zu überwinden. Andererseits muss sie nicht übermässig dimensioniert sein, um grössere Unwuchten, die es auszugleichen gilt und grössere Aussenmasse des Getriebes zu vermeiden.

Im Beispielsfall ist dieser Schieber 13 als Scheibe konzipiert, die in der Mitte mit einer Ausnehmung 14 zur Durchführung der Abtriebswelle 10 versehen ist. Die Scheibe ist freifliegend auf drei Exzenterbolzen 15a, 15b, 15c gelagert. Diese Exzenterbolzen sind abtriebsseitig mit den Exzentern 4a 4b und 4c verbunden. Ihre jeweilige Exzenterachse weist die Exzentrizität e2 gegenüber der Antriebsachse auf. Sie ist gegenüber der Exzenterachse des zugehörigen Exzenters 4 um 180°, d.h. eine halbe Umdrehung versetzt. Durch diese Anordnung ergibt sich bei entsprechender Dimensionierung der Scheibe 13 die Möglichkeit eines Massenausgleichs zwischen den beiden orbitierenden Elementen 6 und 13.

Selbstverständlich ist die Erfindung nicht auf das dargestellte und beschriebene Ausführungsbeispiel beschränkt. In Abweichung zur gezeigten Anordnung mit Einfach-Exzentern 4a-c könnten die drei Exzenterwellen, d.h. die Antriebswelle und die beiden Führungswellen auch mit je einem Doppel-Exzenter versehen sein. In diesem Fall wären die beiden Scheiben des Doppel-Exzenters mit gleicher Exzentrizität e1 jeweils um 180° gegeneinder versetzt und auf beiden wäre eine Zahnscheibe gelagert. Durch den Einbau von zwei unmittelbar aneinanderliegenden Zahnscheiben wird ein vollständiger Gewichtsausgleich der Exzenterunwucht geschaffen. In diesem Fall wäre angrenzend an den kreisenden Schieber ebenfalls ein Ausgleichgewicht vorzusehen. Aufgrund der sich dann ergebenden axialen Länge der Exzenterwellen mit der Kombination Doppelexzenter/Schieber/Ausgleichgewicht könnte es sich als zweckmässig erweisen, die Exzenterwellen ebenfalls in der Gehäusehälfte 1b ein zweites Mal zu lagern.

Denkbar wäre auch eine Ausführungsvariante, bei welcher der Zahnkranz der orbitierenden Zahnscheibe eine Aussenverzahnung und der um die Exzentrizität versetzte Zahnkranz der zweiten Zahnscheibe eine Innenverzahnung ist. Letztere wäre dann als rotierende Zahnscheibe an einem mit der Abtriebswelle verbundenen Flansch angeordnet. Würde man Zähne mit dem gleichen Modul wie bei der oben beschriebenen Ausführung wählen, so hätte diese Variante den Vorteil, dass mit einer Getriebestufe ein noch grösseres Übersetzungsverhältnis erzielbar wäre.

Statt der gezeigten Gleitlagerung könnten die beteiligten Elemente selbstverständlich auch in Wälzlagern laufen, wozu sich beispielsweise für die Wellenlager Kugellager oder Schrägkugellager und für die Exzenter Nadellager anbieten.

## Patentansprüche

1. Exzentergetriebe, bei welchem ein Zahnkranz (7) einer ersten orbitierenden Zahnscheibe (6) mit einem Zahnkranz (8) einer zweiten Zahnscheibe (9 im Eingriff steht,
- wobei die beiden Zahnkränze um eine Antriebsexzentrizität (e1) gegeneinander versetzt sind,
- wobei die zweite Zahnscheibe drehfest mit einer in einem feststehenden Gehäuse (1a, 1b) gelagerten Abtriebswelle (10) verbunden ist,
- wobei eine einen Exzenter (4a) tragende Exzenterwelle (2a) eine Gehäusewandung des Gehäuses an einer Seite durchdringt und als Antriebswelle ausgebildet ist, deren Exzenter in einer Bohrung (5a) der ersten orbitierenden Zahnscheibe gelagert ist,
- wobei zur Führung der ersten orbitierenden Zahnscheibe über ihren Umfang verteilt zwei weitere Exzenter (4b, 4c) tragende Exzenterwellen (2b, 2c) vorgesehen sind,
- wobei die zwei weiteren Exzenter (4b, 4c) in entsprechenden Bohrungen (5a) der ersten orbitierenden Zahnscheibe gelagert sind, und
- wobei die drei Exzenterwellen im Gehäuse gelagert sind,
dadurch gekennzeichnet,
- dass die drei Exzenterwellen (2a, 2b, 2c) gleichmässig über den Umfang der ersten orbitierenden Zahnscheibe verteilt sind, und
- dass die drei Exzenterwellen (2a, 2b, 2c) über zugehörige Exzenter (15a, 15b, 15c) mit einem Schieber (13) verbunden sind, wobei diese Exzenter (15a, 15b, 15c) eine gegenüber der Antriebsexzentrizität (e1) wesentlich grössere Exzentrizität (e2) aufweisen.

2. Exzentergetriebe nach Anspruch 1, dadurch gekennzeichnet, dass der Zahnkranz (7) der orbitierenden Zahnscheibe (6) eine Innenverzahnung ist und dass der um die Exzentrizität (el) versetzte Zahnkranz (8) der zweiten Zahnscheibe (9) eine Aussenverzahnung ist.

3. Exzentergetriebe nach Anspruch 1, dadurch gekennzeichnet, dass der Zahnkranz der orbitierenden Zahnscheibe eine Aussenverzahnung ist und dass der um die Exzentrizität versetzte Zahnkranz der zweiten Zahnscheibe eine Innenverzahnung ist, die an einem mit der Abtriebswelle verbundenen Flansch angeordnet ist.

## Claims

1. Eccentric gearing, in which a gear rim (7) of a first orbiting toothed disc (6) is engaged with a gear rim (8) of a second toothed disc (9 [sic],
- the two gear rims being mutually offset by the extent of a drive eccentricity (e1),
- the second toothed disc being connected in rotationally secure arrangement to an output shaft (10) mounted in a fixed housing (1a, 1b),
- an eccentric shaft (2a), which supports an eccentric (4a), penetrating a housing wall of the housing on one side and being configured as a drive shaft, the eccentric of which is mounted in a bore (5a) of the first orbiting toothed disc,
- for the guidance of the first orbiting toothed disc, two further eccentric shafts (2b, 2c) being provided, distributed over its circumference, which eccentric shafts support eccentrics (4b, 4c), and
- the two further eccentrics (4b, 4c) being mounted in corresponding bores (5a) of the first orbiting toothed disc, and
- the three eccentric shafts being mounted in the housing,
characterized in that
- the three eccentric shafts (2a, 2b, 2c) are distributed evenly over the circumference of the first orbiting toothed disc, and
- the three eccentric shafts (2a, 2b, 2c) are connected by associated eccentrics (15a, 15b, 15c) to a slide (13), these eccentrics (15a, 15b, 15c) exhibiting a substantially greater eccentricity (e2) than the drive eccentricity (e1).

2. Eccentric gearing according to Claim 1, characterized in that the gear rim (7) of the orbiting toothed disc (6) is an inner toothing and in that the gear rim (8) of the second toothed disc (9), which gear rim is offset by the extent of the eccentricity (e1), is an outer toothing.

3. Eccentric gearing according to Claim 1, characterized in that the gear rim of the orbiting toothed disc is an outer toothing and in that the gear rim of the second toothed disc, which gear rim is offset by the extent of the eccentricity, is an inner toothing, which is disposed on a flange connected to the output shaft.

## Revendications

1. Engrenage excentrique, dans lequel une couronne dentée (7) d'une première roue dentée giratoire (6) est engrenée avec une couronne dentée (8) d'une deuxième roue dentée (9),
- les deux couronnes dentées étant décalées l'une par rapport à l'autre selon une excentricité d'entraînement (e1),
- la deuxième roue dentée étant reliée sans pouvoir tourner avec un arbre de sortie (10) reposant dans un boîtier fixe (1a, 1b),
- un arbre excentrique (2a) comportant un excentrique (4a) pénètre dans un creux du boîtier d'un côté du boîtier et est réalisé sous la forme d'un arbre d'entraînement dont l'excentrique repose dans un orifice (5a) de la première roue dentée giratoire,
- deux arbres excentriques (2b, 2c) portant deux excentriques (4b, 4c) supplémentaires étant répartis sur le pourtour de la première roue dentée giratoire afin de la guider,
- les deux excentriques (4b, 4c) supplémentaires reposant dans les orifices (5a) correspondants de la première roue dentée giratoire, et
- les trois arbres excentriques reposant dans le boîtier,
caractérisé par le fait
- que les trois arbres excentriques (2a, 2b, 2c) sont répartis régulièrement sur le pourtour de la première roue dentée giratoire, et
- que les trois arbres excentriques (2a, 2b, 2c) sont reliés à un coulisseau (13) par le biais des excentriques (15a, 15b, 15c) associés, des excentriques (15a, 15b, 15c) présentant une excentricité (e2) essentiellement plus importante que l'excentricité (e1) de l'entraînement

2. Engrenage excentrique conforme à la revendication 1, caractérisé par le fait que la couronne dentée (7) de la roue dentée giratoire (6) est une denture intérieure et que la couronne dentée (8) de la deuxième roue dentée (9) décalée selon l'excentricité (e1) est une denture extérieure.

3. Engrenage excentrique conforme à la revendication 1, caractérisé par le fait que la couronne dentée de la roue dentée giratoire est une denture extérieure et que la couronne dentée de la deuxième roue dentée décalée selon l'excentricité est une denture intérieure, laquelle est disposée sur une bride reliée à l'arbre de sortie.
